(19) Europäisches Patentamt / European Patent Office / Office européen des brevets

(11) **EP 3 162 600 A1**

(12) **EUROPEAN PATENT APPLICATION**

(43) Date of publication:
**03.05.2017 Bulletin 2017/18**

(51) Int Cl.:
**B60H 1/32** *(2006.01)* **B60H 1/00** *(2006.01)*

(21) Application number: **16193998.8**

(22) Date of filing: **14.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.10.2015 JP 2015209199**

(71) Applicant: **Toyota Jidosha Kabushiki Kaisha Toyota-shi, Aichi 471-8571 (JP)**

(72) Inventor: **TSUBOUCHI, Masakatsu Aichi-ken, Aichi 471-8571 (JP)**

(74) Representative: **D Young & Co LLP 120 Holborn London EC1N 2DY (GB)**

(54) **VEHICLE COOLING SYSTEM**

(57) A vehicle cooling system includes: an adsorption refrigerating machine (20) having an adsorber portion (22, 24) that includes an evaporation-condensation section (22B, 24B) configured to house a first refrigerant, the adsorption refrigerating machine (20) being configured to cool a third refrigerant that circulates between the evaporation-condensation section (22B, 24B) and a cooler core (52) with evaporative latent heat of the first refrigerant; a second refrigerant flow passage (60) through which second refrigerant is configured to flow that circulates between the adsorption section (22A, 24A) and a radiator (62); a bypass flow passage (60F) that is branched from the second refrigerant flow passage (60) and bypassing the radiator (62); a valve (64) that is provided at the junction of the second refrigerant flow passage (60) and the bypass flow passage (60F) on the downstream side of the radiator (62); and a valve controller (70) configured to control the opening and closing of the valve (64) based on the temperature of the second refrigerant.

FIG. 1

EP 3 162 600 A1

**Description**

BACKGROUND OF THE INVENTION

1. Field of the Invention

The present invention relates to a vehicle cooling system including an adsorption refrigerating machine.

2. Description of Related Art

Some vehicle cooling systems include an adsorption refrigerating machine (adsorption heat pump) (e.g., see Japanese Patent Application Publication No. 2004-150384). In the adsorption refrigerating machine described in JP 2004-150384 A, an adsorption section is provided in an upper part of a closed vessel, and an evaporation-condensation section is provided in a lower part of the closed vessel. Inside the adsorption section, an adsorbent is housed and a heating-cooling pipe is arranged. When a low-temperature second refrigerant (cooling water) flows through the heating-cooling pipe, a first refrigerant (water) inside the closed vessel is adsorbed by the adsorbent, and the first refrigerant evaporates in the evaporation-condensation section. Thus, this adsorption refrigerating machine cools the cooling water flowing through a heat exchange passage, arranged inside the closed vessel, to a cool temperature with the evaporative latent heat of the first refrigerant.

SUMMARY OF THE INVENTION

When adsorbing a first refrigerant by an adsorbent, it is possible to perform proper cooling control in the adsorption refrigerating machine by promptly stabilizing the temperature of the adsorbent to a predetermined temperature.
However, in the adsorption refrigerating machine disclosed in JP 2004-150384 A, the heating-cooling pipe is connected to a cooler (radiator), and the second refrigerant flowing through the heating-cooling pipe is cooled by the cooler. Accordingly, the temperature of the adsorbent tends to rise slowly at the start of operation of the adsorption refrigerating machine. This means that it takes a comparatively long time for the temperature of the adsorbent to stabilize. Thus, the above adsorption refrigerating machine has room for improvement in terms of promptly performing proper cooling control.
The present invention provides a vehicle cooling system that can promptly perform proper cooling control.
An aspect of the invention provides a vehicle cooling system including: an adsorption refrigerating machine including an adsorber portion including an evaporation-condensation section configured to house a first refrigerant, and an adsorption section configured to house an adsorbent capable of adsorbing evaporated first refrigerant, the adsorption refrigerating machine being configured to cool a third refrigerant that circulates between the evaporation-condensation section and a cooler core with evaporative latent heat of the first refrigerant; a second refrigerant flow passage through which a second refrigerant is configured to flow, the second refrigerant is configured to circulate between the adsorption section and a radiator; a bypass flow passage that is branched from the second refrigerant flow passage on an upstream side of the radiator, the bypass flow passage being connected to the second refrigerant flow passage on a downstream side of the radiator after bypassing the radiator; a valve that is provided in the bypass flow passage or an intermediate part of the second refrigerant flow passage, the intermediate part being a part of the second refrigerant flow passage from a point at which the bypass flow passage is branched from the second refrigerant flow passage on the upstream side of the radiator to a point at which the bypass flow passage is connected to the second refrigerant flow passage on the downstream side of the radiator, the intermediate part passing through the radiator; and a valve controller configured to control opening and closing of the valve based on a temperature of the second refrigerant.
In the above aspect, the valve may be provided at the point of the second refrigerant flow passage at which the bypass flow passage is connected to the second refrigerant flow passage on the downstream side of the radiator.
In the vehicle cooling system according to the above aspect, the adsorption refrigerating machine includes the adsorber portion. The adsorber portion has the adsorption section which is configured to house the adsorbent and the evaporation-condensation section which is configured to be filled with the first refrigerant. The second refrigerant is configured to circulate between the adsorption section and the radiator through the second refrigerant flow passage. Thus, the temperature of the adsorbent is set through the second refrigerant. The refrigerant configured to circulate between the evaporation-condensation section and the cooler core is configured to be cooled with the evaporative latent heat generated as the first refrigerant evaporates by being adsorbed by the adsorbent.
Here, the vehicle cooling system includes the bypass flow passage. The bypass flow passage is branched from the second refrigerant flow passage on the upstream side of the radiator and, after bypassing the radiator, connected to the second refrigerant flow passage on the downstream side of the radiator. The valve is provided at the junction of the second refrigerant flow passage and the bypass flow passage, and the opening and closing of the valve is controlled by the valve controller on the basis of the temperature of the second refrigerant.

It is therefore possible to switch the second refrigerant flow passage, for example, between a route that passes through the bypass flow passage and a route that passes through the radiator by controlling the opening and closing of the valve by the valve controller. Thus, if the second refrigerant flow passage is switched to the route passing through the bypass flow passage at the start of operation of the vehicle cooling system, the temperature of the second refrigerant (i.e., the temperature of the adsorbent) can be promptly raised to a predetermined temperature. Then, if the second refrigerant flow passage is switched to the route passing through the radiator after the temperature of the adsorbent has reached the predetermined temperature, the temperature of the second refrigerant (i.e., the temperature of the adsorbent) can be kept at the predetermined temperature. In this way, proper cooling control can be promptly performed in the vehicle cooling system.

In the above aspect of the invention, the valve controller may be configured to adjust an open area of the valve toward the intermediate part or the bypass flow passage based on the temperature of the second refrigerant.

The above aspect of the invention may include a temperature sensor that is provided in a part of the second refrigerant flow passage from the point at which the bypass flow passage is connected to the second refrigerant flow passage on the downstream side of the radiator to the adsorption refrigerating machine, or in a part of the second refrigerant flow passage from the adsorption refrigerating machine to the point at which the bypass flow passage is branched from the second refrigerant flow passage on the upstream side of the radiator, and that is configured to detect the temperature of the second refrigerant. The valve controller may be configured to control the opening and closing of the valve based on the temperature of the second refrigerant detected by the temperature sensor.

In the above aspect, the temperature sensor may be provided at the valve or on a downstream side of the valve in the second refrigerant flow passage, when the valve is provided at the point of the second refrigerant flow passage at which the bypass flow passage is connected to the second refrigerant flow passage on the downstream side of the radiator.

In the vehicle cooling system of the above configuration, the valve controller is configured to control the opening and closing of the valve on the basis of the temperature of the second refrigerant detected by the temperature sensor, so that the temperature of the adsorbent can be kept accurately at the predetermined temperature. Thus, the vehicle cooling system can perform cooling control more accurately.

In the above aspect of the invention, the second refrigerant flow passage may be connected to an auxiliary portion on the upstream side of the radiator, and a temperature of the auxiliary portion is configured to be adjusted with the second refrigerant.

In the vehicle cooling system of the above configuration, the temperatures of the auxiliary portion can be adjusted by means of the second refrigerant. This can contribute to improving the reliability of the auxiliary portion.

In the above aspect of the invention, when the valve is provided at the point of the second refrigerant flow passage at which the bypass flow passage is connected to the second refrigerant flow passage on the downstream side of the radiator, a flow passage area of a part of the second refrigerant flow passage connected to the valve may be larger than a flow passage area of the bypass flow passage.

In the above configuration, the flow passage area of the part of the second refrigerant flow passage connected to the valve is set to be larger than the flow passage area of the bypass flow passage. Accordingly, the rate of the second refrigerant which has passed through the radiator can be suitably adjusted on the downstream side of the valve in the second refrigerant flow passage. Thus, it is possible to further stabilize the temperature of the second refrigerant on the downstream side of the valve.

The above aspect of the invention may include an engine cooling radiator that is configured to cool an engine. The engine cooling radiator may be provided on a rear side from the radiator in a vehicle front-rear direction.

In the vehicle cooling system of the above configuration, the radiator and the engine cooling radiator can be arranged side by side in the vehicle front-rear direction. Thus, an efficient layout structure in the vehicle can be realized.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a configurational view showing the overall configuration of a vehicle cooling system according to an embodiment;

FIG. 2 is a configurational view showing the adsorption refrigerating machine shown in FIG. 1;

FIG. 3 is a block diagram showing a control unit used for the vehicle cooling system shown in FIG. 1;

FIG. 4 is a graph showing an equilibrium adsorption isotherm and a desorption isotherm of an adsorbent used for the adsorption refrigerating machine shown in FIG. 2; and

FIG. 5 is a graph showing the temperature of a second refrigerant in the embodiment and a comparative example.

DETAILED DESCRIPTION OF EMBODIMENTS

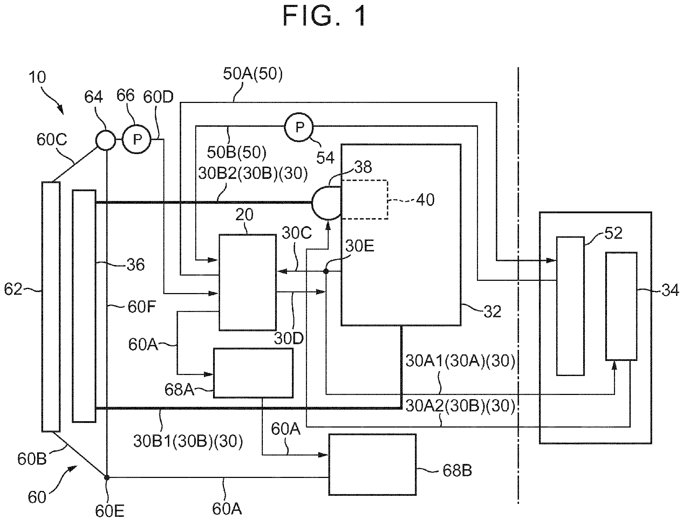

In the following, a vehicle cooling system 10 according to an embodiment will be described using the drawings. As shown in FIG. 1, the vehicle cooling system 10 is configured as a cooling system including an adsorption refrigerating machine (adsorption heat pump) 20. The vehicle cooling system 10 further includes a high-temperature loop flow passage 30 through which high-temperature cooling water for heating an adsorbent 26 (not shown in FIG. 1) of the adsorption refrigerating machine 20 is supplied to the adsorption refrigerating machine 20, a cool-temperature loop flow passage 50 through which a cool-temperature refrigerant (cooling water) produced by the adsorption refrigerating machine 20 is circulated, and a low-temperature loop flow passage 60 as the "second refrigerant flow passage" through which a low-temperature refrigerant (cooling water) is supplied to the adsorption refrigerating machine 20. In the following, the adsorption refrigerating machine 20 will be described first, and then the high-temperature loop flow passage 30, the cool-temperature loop flow passage 50, and the low-temperature loop flow passage 60 will be described.

The adsorption refrigerating machine 20 will be described now. The adsorption refrigerating machine 20 includes a pair of adsorber portions, with one adsorber portion performing an adsorption process and the other adsorber portion performing a desorption process. That is, in the one adsorber portion, a first refrigerant (water) is adsorbed by the adsorbent. Cooling water cooled to a cool temperature is produced by means of evaporative latent heat that is generated as the adsorbent adsorbs the first refrigerant and the first refrigerant evaporates accordingly. In the other adsorber portion, the adsorbent having adsorbed the first refrigerant (water) is heated and thereby the first refrigerant (water) is desorbed from the adsorbent. A more specific description follows.

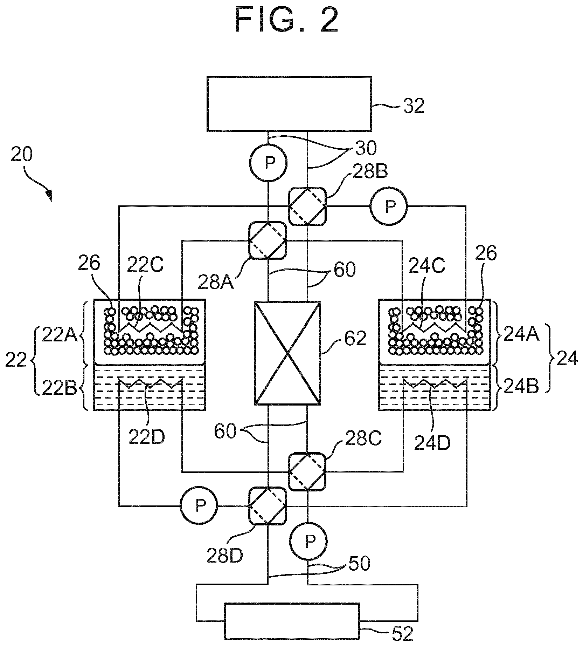

As shown in FIG. 2, the adsorption refrigerating machine 20 includes a first adsorption section 22A and a second adsorption section 24A as the "adsorption sections," and a first evaporation-condensation section 22B and a second evaporation-condensation section 24B as the "evaporation-condensation sections". The first adsorption section 22A and the first evaporation-condensation section 22B as a pair constitute a first adsorber portion 22 as an "adsorber portion," and the inside of the first adsorber portion 22 is closed. The second adsorption section 24A and the second evaporation-condensation section 24B as a pair constitute a second adsorber portion 24 as an "adsorber portion," and the inside of the second adsorber portion 24 is closed.

The adsorbent 26 is housed in each of the first adsorption section 22A and the second adsorption section 24A. The adsorbent 26 is composed of silica gel, zeolite, or the like (zeolite, in this embodiment). A first adsorption core 22C (heat exchanger) is arranged inside the first adsorption section 22A. The first adsorption core 22C is connected to the high-temperature loop flow passage 30 or the low-temperature loop flow passage 60, to be described later, through four-way valves 28A, 28B (in FIG. 2, the first adsorption core 22C is connected to the high-temperature loop flow passage 30). As with the first adsorption section 22A, a second adsorption core 24C (heat exchanger) is arranged inside the second adsorption section 24A. The second adsorption core 24C is connected to the high-temperature loop flow passage 30 or the low-temperature loop flow passage 60, to be described later, through the four-way valves 28A, 28B (in FIG. 2, the second adsorption core 24C is connected to the low-temperature loop flow passage 60). Through the first adsorption core 22C and the second adsorption core 24C flows the high-temperature cooling water that flows through the high-temperature loop flow passage 30 or a low-temperature second refrigerant (cooling water, in this embodiment) that flows through the low-temperature loop flow passage 60. Thus, the temperature of the adsorbent 26 arranged inside the first adsorption section 22A and the second adsorption section 24A is brought to a specified temperature by the first adsorption core 22C and the second adsorption core 24C.

A first refrigerant (water, in this embodiment) is housed inside the first evaporation-condensation section 22B and the second evaporation-condensation section 24B. A first evaporation-condensation core 22D (heat exchanger) is arranged inside the first evaporation-condensation section 22B. The first evaporation-condensation core 22D is connected to the cool-temperature loop flow passage 50 or the low-temperature loop flow passage 60, to be described later, through four-way valves 28C, 28D (in FIG. 2, the first evaporation-condensation core 22D is connected to the low-temperature loop flow passage 60). As with the first evaporation-condensation section 22B, a second evaporation-condensation core 24D (heat exchanger) is arranged inside the second evaporation-condensation section 24B. The second evaporation-condensation core 24D is connected to the cool-temperature loop flow passage 50 or the low-temperature loop flow passage 60, to be described later, through the four-way valves 28C, 28D (in FIG. 2, the second evaporation-condensation core 24D is connected to the cool-temperature loop flow passage 50). Through the first evaporation-condensation core 22D and the second evaporation-condensation core 24D flows the cool-temperature cooling water that flows through the cool-temperature loop flow passage 50 or the low-temperature second refrigerant that flows through the low-temperature loop flow passage 60.

Next, the operation of the adsorption refrigerating machine 20 will be briefly described. In the state shown in FIG. 2, the first adsorption core 22C of the first adsorption section 22A is connected to the high-temperature loop flow passage 30. The first evaporation-condensation core 22D of the first evaporation-condensation section 22B is connected to the low-temperature loop flow passage 60. Thus, the high-temperature cooling water (e.g., at 90°C in this embodiment) flows through the first adsorption core 22C. The low-temperature second refrigerant (e.g., at 35°C in this embodiment) flows through the first evaporation-condensation core 22D. On the other hand, the second adsorption core 24C of the second adsorption section 24A is connected to the low-temperature loop flow passage 60. The second evaporation-condensation core 24D of the second evaporation-condensation section 24B is connected to the low-temperature loop flow passage 50. Thus, the low-temperature second refrigerant flows through the second adsorption core 24C.

In the second adsorber portion 24, the adsorption process is performed in the second adsorption section 24A and the first refrigerant in the second evaporation-condensation section 24B evaporates. The evaporative latent heat generated by the evaporation of the first refrigerant is used to produce the cool-temperature cooling water (e.g., at 7°C in this embodiment) flowing through the cool-temperature loop flow passage 50. Specifically, the inside of the second adsorber portion 24 is depressurized as the dried adsorbent 26 adsorbs the first refrigerant, which causes the first refrigerant in the second evaporation-condensation section 24B to evaporate. At the same time, the cooling water inside the second evaporation-condensation core 24D is cooled with the evaporative latent heat of the first refrigerant. As a result, the cooling water flowing through the cool-temperature loop flow passage 50 is cooled to a cool temperature. Adsorption heat is generated when the adsorbent 26 in the second adsorption section 24A adsorbs the first refrigerant. The adsorption heat is removed by the second refrigerant flowing through the second adsorption core 24C.

Meanwhile, in the first adsorber portion 22, the desorption process is performed in the first adsorption section 22A. In the desorption process, the first refrigerant having been adsorbed by the adsorbent 26 is desorbed from the adsorbent 26. Specifically, the high-temperature loop flow passage 30 is connected to the first adsorption core 22C of the first adsorption section 22A. Thus, the adsorbent 26 inside the first adsorption section 22A is heated through the first adsorption core 22C. As a result, the adsorbent 26 inside the first adsorption section 22A is dried and the first refrigerant is desorbed from the adsorbent 26. The low-temperature loop flow passage 60 is connected to the first evaporation-condensation core 22D. Thus, the first refrigerant having been desorbed from the adsorbent 26 is condensed and restored to the state of water.

In the adsorption refrigerating machine 20, the four-way valves 28A to 28D are operated after the desorption process in the first adsorber portion 22 and the adsorption process in the second adsorber portion 24 have been performed. As the four-way valves 28A to 28D are operated, the process performed in the first adsorber portion 22 is switched from the desorption process to the adsorption process, while the process performed in the second adsorber portion 24 is switched from the adsorption process to the desorption process. Thus, the adsorption process and the desorption process are repeated in the first adsorption section 22A and the second adsorption section 24A to produce the cool-temperature cooling water in the cool-temperature loop flow passage 50.

Next, the high-temperature loop flow passage 30 will be described. As shown in FIG. 1, the high-temperature loop flow passage 30 has a first high-temperature loop flow passage 30A that circulates between an engine 32 (high-temperature heat source) and a heater core 34 being a heat exchanger. The high-temperature loop flow passage 30 further has a second high-temperature loop flow passage 30B that circulates between the engine 32 and an engine cooling radiator 36. Cooling water for cooling the engine 32 is circulated through the first high-temperature loop flow passage 30A and the second high-temperature loop flow passage 30B.

The first high-temperature loop flow passage 30A has an upstream-side pipe 30A1 constituting an upstream-side part of the first high-temperature loop flow passage 30A and a downstream-side pipe 30A2 constituting a downstream-side part of the first high-temperature loop flow passage 30A. The engine 32 and the heater core 34 are connected to each other through the upstream-side pipe 30A1 and the downstream-side pipe 30A2. A thermostat 38 and a water pump 40 are connected in series on the downstream side of the downstream-side pipe 30A2. Thus, the high-temperature cooling water is circulated through the first high-temperature loop flow passage 30A via the heater core 34. Accordingly, the exhaust heat of the engine 32 can be used to heat the vehicle interior.

The second high-temperature loop flow passage 30B has an upstream-side pipe 30B1 constituting an upstream-side part of the second high-temperature loop flow passage 30B and a downstream-side pipe 30B2 constituting a downstream-side part of the second high-temperature loop flow passage 30B. The engine 32 and the engine cooling radiator 36 are connected to each other through the upstream-side pipe 30B1 and the downstream-side pipe 30B2. The downstream-side end of the downstream-side pipe 30B2 is connected to the thermostat 38. Thus, the second high-temperature loop flow passage 30B is configured as a circulation flow passage for cooling the engine 32.

The high-temperature loop flow passage 30 further has a high-temperature refrigerant pipe 30C and a high-temperature refrigerant pipe 30D. The high-temperature refrigerant pipe 30C is extended from a branch point 30E provided in an intermediate part of the upstream-side pipe 30A1 and connected to the adsorption refrigerating machine 20. The high-temperature refrigerant pipe 30D is extended from the adsorption refrigerating machine 20 and connected to the upstream-side pipe 30A1 on the downstream side of the branch point 30E. Specifically, the high-temperature refrigerant pipe 30C and the high-temperature refrigerant pipe 30D are connected through the four-way valves 28A, 28B described above to the first adsorption core 22C or the second adsorption core 24C in which the desorption process is performed. Thus, the high-temperature cooling water is supplied to the first adsorption core 22C or the second adsorption core 24C, and the desorption process is performed in the first adsorption section 22A or the second adsorption section 24A.

Next, the cool-temperature loop flow passage 50 will be described. The cool-temperature loop flow passage 50 is configured as a circulation flow passage that circulates between the adsorption refrigerating machine 20 and a cooler core 52 being a heat exchanger. Cooling water flows through the cool-temperature loop flow passage 50. The cool-temperature loop flow passage 50 has an upstream-side pipe 50A constituting an upstream-side part of the cool-temperature loop flow passage 50 and a downstream-side pipe 50B constituting a downstream-side part of the cool-temperature loop flow passage 50. The adsorption refrigerating machine 20 and the cooler core 52 are connected to each other through the upstream-side pipe 50A and the downstream-side pipe 50B. Specifically, the upstream-side pipe 50A and the downstream-side pipe 50B are connected through the four-way valves 28C, 28D described above to the first evaporation-condensation core 22D or the second evaporation-condensation core 24D in both of which the adsorption process is performed. Thus, the cool-temperature cooling water having been cooled by the adsorption refrigerating machine 20 circulates through the cool-temperature loop flow passage 50, and the cool-temperature cooling water is supplied to the cooler core 52 and the vehicle interior is cooled. A water pump 54 is provided in an intermediate part of the downstream-side pipe 50B, and the cooling water is circulated through the cool-temperature loop flow passage 50 as the water pump 54 is driven.

Next, the low-temperature loop flow passage 60 will be described. The low-temperature loop flow passage 60 is configured as a circulation flow passage that circulates between the adsorption refrigerating machine 20 and a radiator 62 through a thermostat valve 64 as the "valve" and a water pump 66 as the "pump". The second refrigerant described above flows through the low-temperature loop flow passage 60. That is, the low-temperature loop flow passage 60 is connected through the four-way valves 28A, 28B to the first adsorption core 22C or the second adsorption core 24C in both of which the adsorption process is performed, and is connected through the four-way valves 28C, 28D to the first evaporation-condensation core 22D or the second evaporation-condensation core 24D in both of which the desorption process is performed.

The low-temperature loop flow passage 60 includes an upstream-side pipe 60A constituting the upstream side of the low-temperature loop flow passage 60, a first intermediate pipe 60B and a second intermediate pipe 60C constituting an intermediate part of the low-temperature loop flow passage 60, and a downstream-side pipe 60D constituting the downstream side of the low-temperature loop flow passage 60.

The upstream-side end of the upstream-side pipe 60A is connected to the adsorption refrigerating machine 20, and a branch point 60E is provided at the downstream-side end of the upstream-side pipe 60A. The branch point 60E and the radiator 62 are connected to each other by the first intermediate pipe 60B. The upstream-side end of the second intermediate pipe 60C is connected to the radiator 62, and the downstream-side end of the second intermediate pipe 60C is connected to the upstream-side end of the downstream-side pipe 60D through the thermostat valve 64. The downstream-side end of the downstream-side pipe 60D is connected to the adsorption refrigerating machine 20. Thus, in the low-temperature loop flow passage 60, the second refrigerant having been cooled by the radiator 62 is supplied to the downstream-side pipe 60D through the thermostat valve 64.

A first auxiliary portion 68A and a second auxiliary portion 68B as the "auxiliary portions" are connected in series in an intermediate part of the upstream-side pipe 60A. The first auxiliary portion 68A and the second auxiliary portion 68B represent a throttle valve, an inverter, etc. installed inside the engine room of the vehicle. The temperatures of the first auxiliary portion 68A and the second auxiliary portion 68B are adjusted with the second refrigerant flowing through the upstream-side pipe 60A.

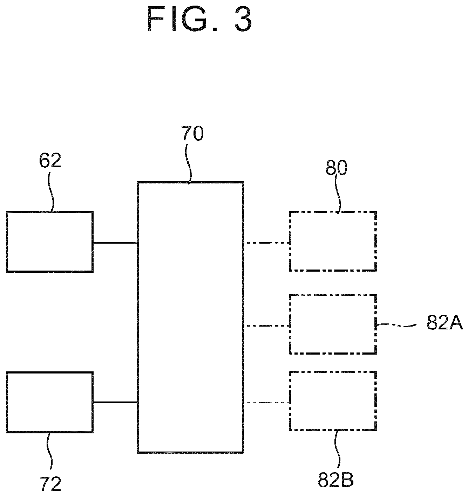

The radiator 62 is arranged on the front side from the engine cooling radiator 36 in the vehicle front-rear direction, and the radiator 62 and the engine cooling radiator 36 are arranged side by side in the vehicle front-rear direction. The radiator 62 includes a fan (not shown), and the fan is operated under the control of an ECU 70 (see FIG. 3).

The low-temperature loop flow passage 60 further includes a bypass pipe 60F as the "bypass flow passage". The bypass pipe 60F connects between the branch point 60E and the thermostat valve 64. That is, the bypass pipe 60F is configured as a flow passage that bypasses the radiator 62. The second refrigerant circulating through the bypass pipe 60F flows via the thermostat valve 64 into the downstream-side pipe 60D. Thus, the route for the second refrigerant to flow through the bypass pipe 60F and the route for the second refrigerant to flow through the first intermediate pipe 60B, the radiator 62, and the second intermediate pipe 60C are connected in parallel in the intermediate part of the low-temperature loop flow passage 60.

The thermostat valve 64 is configured as a valve with a thermostat. For example, wax (not shown) is provided inside the thermostat valve 64, and the opening degree of the thermostat valve 64 varies as the wax expands or contracts on the basis of the temperature of the second refrigerant flowing through the thermostat valve 64. To be more specific, when the temperature of the second refrigerant inside the thermostat valve 64 is lower than a predetermined temperature, the wax contracts and the valve of the thermostat valve 64 is closed, so that the flow passage passing through the radiator 62 is closed while the flow passage passing through the bypass pipe 60F is opened (the second refrigerant which has passed through the bypass pipe 60F flows into the downstream-side pipe 60D). When the temperature of the second refrigerant inside the thermostat valve 64 becomes equal to or higher than the predetermined temperature, the wax expands and the valve of the thermostat valve 64 is opened, so that the flow passage passing through the bypass pipe 60F is closed while the flow passage passing through the radiator 62 is opened (the second refrigerant which has passed through the radiator 62 flows into the downstream-side pipe 60D). The open area of the valve of the thermostat valve 64 is set so as to increase as the temperature of the second refrigerant increases from the predetermined temperature. Thus, in this embodiment, the thermostat valve 64 functions as the "valve controller", and when the temperature of the second refrigerant inside the thermostat valve 64 (i.e., the temperature of the second refrigerant inside the downstream-side pipe 60D) becomes equal to or higher than the predetermined temperature, the second refrigerant having been cooled by the radiator 62 is supplied to the adsorption refrigerating machine 20.

The sectional area (flow passage area) of the second intermediate pipe 60C is set to be larger than the sectional area (flow passage area) of the bypass pipe 60F. Accordingly, when the open area of the thermostat in the thermostat valve 64 is at its maximum, the amount of second refrigerant flowing from the second intermediate pipe 60C into the downstream-side pipe 60D is larger than the amount of second refrigerant flowing from the bypass pipe 60F into the downstream-side pipe 60D.

The water pump 66 is provided in an intermediate part of the downstream-side pipe 60D, and the second refrigerant circulates through the second intermediate pipe 60C as the water pump 66 is driven.

A water temperature sensor 72 (see FIG. 3) as the "temperature sensor" is provided in an intermediate part of the downstream-side pipe 60D, and the water temperature sensor 72 is electrically connected to the ECU 70 (control unit). On the basis of a signal output from the water temperature sensor 72 to the ECU 70, the ECU 70 detects the temperature of the second refrigerant and operates the fan of the radiator 62. Alternatively, the water temperature sensor 72 may be provided in the thermostat valve 64 so as to detect the temperature of the second refrigerant inside the thermostat valve 64 by the water temperature sensor 72.

Next, a predetermined temperature Tm of the second refrigerant supplied to the adsorption refrigerating machine 20 (i.e., the second refrigerant supplied to the first adsorption core 22C or the second adsorption core 24C in which the adsorption process is performed), in other words, the temperature of the adsorbent 26 at which the adsorption process is performed will be described. First, a cooling output Q in the adsorption refrigerating machine 20 when the first refrigerant is adsorbed by the adsorbent 26 is calculated by the following formula (1):

$$Q = q \times \Delta C \times \text{the amount of adsorbent } 26 \cdots (1)$$

Here, q is the evaporative latent heat of the first refrigerant, and $\Delta C$ is the effective amount of adsorption of the first refrigerant by the adsorbent 26 during operation of the adsorption refrigerating machine 20. The above formula (1) shows that the cooling output Q depends on the effective amount of adsorption $\Delta C$. That is, if the effective amount of adsorption $\Delta C$ is increased, the cooling output Q in the adsorption refrigerating machine 20 is increased. Thus, to set a high cooling output Q, it is desirable to increase the effective amount of adsorption $\Delta C$.

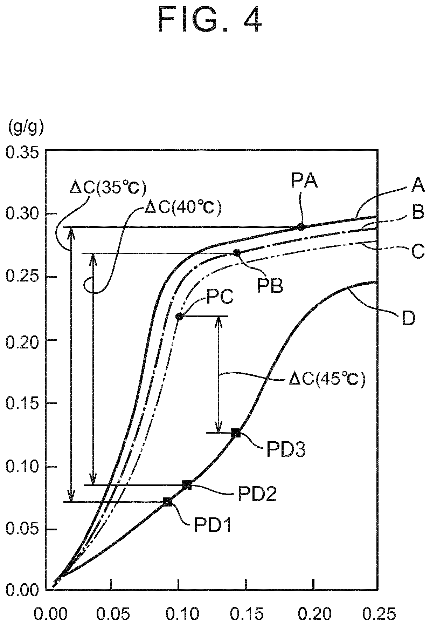

The effective amount of adsorption $\Delta C$ can be estimated from the properties of the adsorbent 26 and the operation conditions of the adsorption refrigerating machine 20. Specifically, it is possible to estimate the effective amount of adsorption $\Delta C$ under certain conditions by using the equilibrium adsorption isotherm and the desorption isotherm of the adsorbent 26 as shown in FIG. 4. Here, the horizontal axis of the graph shown in FIG. 4 represents the relative steam pressure (relative humidity) inside the first and second adsorber portions 22, 24 during operation of the adsorption refrigerating machine 20, and the vertical axis of the graph represents the amount of adsorption (g/g) or the amount of desorption (g/g) of the refrigerant per 1g of the adsorbent 26.

The equilibrium adsorption isotherm indicated by the solid line in FIG. 4 is an equilibrium adsorption isotherm A of the adsorbent 26 when the temperature of the adsorbent 26 is 35°C. The equilibrium adsorption isotherm indicated by the one-dot dashed line is an equilibrium adsorption isotherm B of the adsorbent 26 when the temperature of the adsorbent 26 is 40°C, and the equilibrium adsorption isotherm indicated by the two-dot dashed line is an equilibrium adsorption isotherm C of the adsorbent 26 when the temperature of the adsorbent 26 is 45°C. The desorption isotherm indicated by the thick solid line in FIG. 4 is a desorption isotherm D of the adsorbent 26 when the temperature of the adsorbent 26 is 90°C. FIG. 4 is a reference example for description.

Here, since the adsorption refrigerating machine 20 uses the cooling water of the engine 32 of the vehicle, a temperature Th of the high-temperature cooling water circulating through the high-temperature loop flow passage 30 is set to 90°C in this embodiment. A temperature T1 of the cooling water circulating inside the cool-temperature loop flow passage 50 and supplied to the cooler core 52 is set to 7°C. The effective amount of adsorption $\Delta C$ of the adsorbent 26 when the predetermined temperature Tm of the second refrigerant circulating through the low-temperature loop flow passage 60 is set to 35°C, 40°C, and 45°C under the above conditions is estimated as follows.

When the temperature Tm of the second refrigerant is set to 35°C, the adsorbent 26 on the adsorption side is cooled with the second refrigerant, and therefore the temperature of the adsorbent 26 on the adsorption side is set to 35°C, substantially the same as the temperature Tm of the second refrigerant. Thus, the relative steam pressure (relative humidity) on the adsorption side $\phi1$ is obtained as follows: $\phi1 = P\ (7°C)\ /\ P\ (35°C) = 1.0\ (kPa)\ /\ 5.6\ (kPa) \approx 0.18$ (see the black circular point PA on the equilibrium adsorption isotherm A). On the other hand, the relative steam pressure (relative humidity) on the desorption side $\phi2$ is obtained as follows: $\phi2 = P\ (35°C)\ /\ P\ (90°C) = 5.6\ (kPa)\ /\ 70\ (kPa) \approx 0.08$ (see the black square point PD1 on the desorption isotherm D). Thus, from the graph of FIG. 4, the effective amount of adsorption $\Delta C$ (35°C) when the temperature Tm of the second refrigerant is set to 35°C is approximately 0.22.

Next, when the temperature Tm of the second refrigerant is set to 40°C, as with the above case, the adsorbent 26 on the adsorption side is set to 40°C, substantially the same as the temperature Tm of the second refrigerant. Thus, the relative steam pressure (relative humidity) on the adsorption side $\phi1$ is obtained as follows: $\phi1 = P\ (7°C)\ /\ P\ (40°C) = 1.0\ (kPa)\ /\ 7.4\ (kPa) \approx 0.14$ (see the black circular point PB on the equilibrium adsorption isotherm B). On the other hand, the relative steam pressure (relative humidity) on the desorption side $\phi2$ is obtained as follows: $\phi2 = P\ (40°C)\ /\ P\ (90°C) = 7.4\ (kPa)\ /\ 70\ (kPa) \approx 0.11$ (see the black square point PD2 on the desorption isotherm D). Thus, from the graph of FIG. 4, the effective amount of adsorption $\Delta C$ (40°C) when the temperature Tm of the second refrigerant is set to 40°C is approximately 0.19.

Moreover, when the temperature Tm of the second refrigerant is set to 45°C, as with the above cases, the temperature of the adsorbent 26 on the adsorption side is set to 45°C, substantially the same as the temperature Tm of the second refrigerant. Thus, the relative steam pressure (relative humidity) on the adsorption side $\phi1$ is obtained as follows: $\phi1 = P\ (7°C)\ /\ P\ (45°C) = 1.0\ (kPa)\ /\ 9.6\ (kPa) \approx 0.10$ (see the black circular point PC on the equilibrium adsorption isotherm C). On the other hand, the relative steam pressure (relative humidity) on the desorption side $\phi2$ is obtained as follows: $\phi2 = P\ (45°C)\ /\ P\ (90°C) = 9.6\ (kPa)\ /\ 70\ (kPa) \approx 0.14$ (see the black square point PD3 on the desorption isotherm D). Thus, from the graph of FIG. 4, the effective amount of adsorption $\Delta C$ (45°C) when the temperature Tm of the second refrigerant is set to 45°C is approximately 0.1.

As has been shown above, the effective amount of adsorption $\Delta C$ of the first refrigerant by the adsorbent 26 during operation of the adsorption refrigerating machine 20 increases as the temperature of the adsorbent 26 on the adsorption side decreases. In other words, lowering the temperature of the second refrigerant can enhance the adsorption performance of the adsorbent 26. As described above, the effective amount of adsorption $\Delta C$ varies as the temperature of the adsorbent 26 varies. It is therefore desirable to promptly bring the temperature of the adsorbent 26 to the predetermined temperature Tm and keep the temperature at the predetermined temperature Tm. In this embodiment, the adsorption refrigerating machine 20 is loaded on a vehicle. Therefore, with the service environment etc. of the adsorption refrigerating machine 20 taken into account, the predetermined temperature Tm of the second refrigerant is set to 35°C. That is, when the temperature of the second refrigerant inside the downstream-side pipe 60D becomes equal to or higher than the predetermined temperature Tm, the valve of the thermostat valve 64 opens and the second refrigerant having been cooled by the radiator 62 is supplied to the adsorption refrigerating machine 20. Thus, the temperature of the adsorbent 26 on the adsorption side is kept at the predetermined temperature Tm.

Next, the workings and effects of the vehicle cooling system 10 of this embodiment will be described.

In the vehicle cooling system 10 configured as described above, the adsorption refrigerating machine 20 is provided, and the adsorption process is performed in one of the first adsorber portion 22 and the second adsorber portion 24 of the adsorption refrigerating machine 20, while the desorption process is performed in the other of the first adsorber portion 22 and the second adsorber portion 24 (in the state shown in FIG. 2, the desorption process is performed in the first adsorber portion 22 and the adsorption process is performed in the second adsorber portion 24).

That is, in the state shown in FIG. 2, the low-temperature loop flow passage 60 is connected to the second adsorption core 24C of the second adsorption section 24A, and the cool-temperature loop flow passage 50 is connected to the second evaporation-condensation core 24D of the second evaporation-condensation section 24B. As the adsorbent 26 of the second adsorption section 24A is cooled with the second refrigerant flowing through the second adsorption core 24C and the adsorbent 26 adsorbs the first refrigerant, the first refrigerant inside the second evaporation-condensation section 24B evaporates. At the same time, the cooling water flowing through the second evaporation-condensation core 24D is cooled with the evaporative latent heat of the first refrigerant to a cool temperature, and the cooled cooling water circulates through the cool-temperature loop flow passage 50 and is supplied to the cooler core 52.

On the other hand, in the state shown in FIG. 2, the high-temperature loop flow passage 30 is connected to the first adsorption core 22C of the first adsorption section 22A, and the low-temperature loop flow passage 60 is connected to the first evaporation-condensation core 22D of the first evaporation-condensation section 22B. Thus, the adsorbent 26 inside the first adsorption section 22A is heated through the first adsorption core 22C. As a result, the adsorbent 26 is dried and the first refrigerant is desorbed from the adsorbent 26. Since the low-temperature loop flow passage 60 is connected to the first evaporation-condensation core 22D, the first refrigerant having been desorbed from the adsorbent 26 is condensed and restored to the state of water.

Here, as shown in FIG. 1, the low-temperature loop flow passage 60 includes the bypass pipe 60F. The bypass pipe 60F is branched at the branch point 60E located on the upstream side of the radiator 62 in the low-temperature loop flow passage 60 and, after bypassing the radiator 62, connected to the thermostat valve 64 located on the downstream side of the radiator 62 in the low-temperature loop flow passage 60. In the thermostat valve 64, when the temperature of the second refrigerant becomes equal to or higher than the predetermined temperature Tm, the valve of the thermostat valve 64 opens, so that the flow passage passing through the bypass pipe 60F is closed and the second refrigerant which has passed through the radiator 62 flows into the downstream-side pipe 60D.

Thus, it is possible to switch the low-temperature loop flow passage 60 between the route passing through the bypass pipe 60F and the route passing through the radiator 62 by opening and closing the valve of the thermostat valve 64. That is, for example, when the temperature of the second refrigerant is lower than the predetermined temperature Tm at start of the vehicle cooling system 10 etc., the valve of the thermostat valve 64 is closed, so that the low-temperature loop flow passage 60 uses only the route that passes through the bypass pipe 60F. As a result, the temperature of the second refrigerant (i.e., the temperature of the adsorbent 26 on the adsorption side) can be promptly raised to the predetermined temperature Tm. Then, when the temperature of the adsorbent 26 becomes equal to or higher than the predetermined temperature Tm, the valve of the thermostat valve 64 opens. Accordingly, the low-temperature loop flow passage 60 uses only the route that passes through the radiator 62, so that the temperature of the second refrigerant can be lowered. Thus, after the temperature of the adsorbent 26 has reached the predetermined temperature Tm, the temperature of the second refrigerant (the temperature of the adsorbent 26 on the adsorption side) can be kept at the predetermined temperature Tm by opening and closing the valve of the thermostat valve 64. In this way, the temperature of the adsorbent 26 is promptly stabilized, so that proper cooling control can be promptly performed in the vehicle cooling system 10.

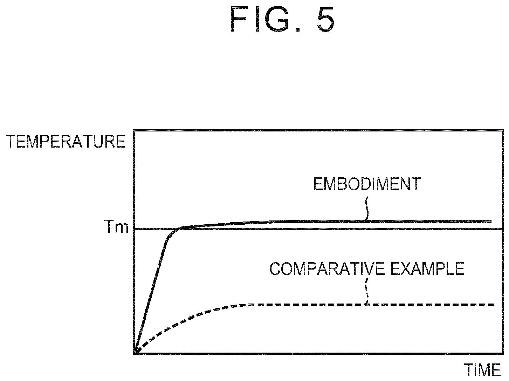

Using the graph shown in FIG. 5, this advantage will be described below through a comparison with a comparative example. The graph shown in FIG. 5 indicates the temperature of the second refrigerant (i.e., the adsorbent 26 in the adsorption process), with the horizontal axis of the graph representing time from the start of the vehicle cooling system 10 and the vertical axis representing the temperature of the second refrigerant (i.e., the adsorbent 26 in the adsorption process). The data plotted by the dashed line indicates the temperature of the second refrigerant in the comparative example, and the data plotted by the solid line indicates the temperature of the second refrigerant in the embodiment.

In the comparative example, the bypass pipe 60F of the embodiment is omitted from the low-temperature loop flow passage 60. That is, in the low-temperature loop flow passage 60 of the comparative example, the second refrigerant having been cooled by passing through the radiator 62 flows into the adsorption refrigerating machine 20. Thus, in the comparative example, the cooled second refrigerant always flows into the adsorption refrigerating machine 20, so that the temperature of the second refrigerant (the adsorbent 26 in the adsorption process) rises slowly after the start of the vehicle cooling system 10. That is, in the comparative example, although the temperature of the second refrigerant (the adsorbent 26 in the adsorption process) remains low throughout the time, it takes a comparatively long time for the temperature of the second refrigerant (the adsorbent 26 in the adsorption process) to stabilize. Thus, in the comparative example, there is room for improvement in terms of promptly performing cooling control in the vehicle cooling system 10.

In the embodiment, by contrast, the valve of the thermostat valve 64 remains closed until the temperature of the second refrigerant reaches the predetermined temperature Tm as described above. Thus, the second refrigerant which has passed through the bypass pipe 60F flows into the adsorption refrigerating machine 20, so that the temperature of the second refrigerant (the adsorbent 26 in the adsorption process) can be raised promptly after the start of the vehicle cooling system 10. Moreover, when the temperature of the second refrigerant becomes equal to or higher than the predetermined temperature Tm, the valve of the thermostat valve 64 opens, so that the second refrigerant which has passed through the radiator 62 flows into the adsorption refrigerating machine 20. Thus, the temperature of the second refrigerant (the adsorbent 26 in the adsorption process) can be kept at the predetermined temperature Tm. Therefore, according to the embodiment, compared with the comparative example, the time taken for the temperature of the second refrigerant (the adsorbent 26) to stabilize is reduced and the cooling control in the vehicle cooling system 10 can be performed promptly.

In the embodiment, the thermostat valve 64 with the thermostat is used to open and close the valve of the thermostat valve 64. Thus, it is possible, by a simple configuration, to keep the temperature of the second refrigerant on the downstream side of the thermostat valve 64 at the predetermined temperature Tm.

The first auxiliary portion 68A and the second auxiliary portion 68B are connected in series to the upstream-side pipe 60A of the low-temperature loop flow passage 60. Thus, it is possible to adjust the temperatures of the first auxiliary portion 68A and the second auxiliary portion 68B by means of the low-temperature loop flow passage 60 through which the low-temperature second refrigerant is supplied to the adsorption refrigerating machine 20. That is, when the temperature in the service environment of the first auxiliary portion 68A and the second auxiliary portion 68B is comparatively low, the first auxiliary portion 68A and the second auxiliary portion 68B can be promptly warmed up, and when the temperatures of the first auxiliary portion 68A and the second auxiliary portion 68B become high, the first auxiliary portion 68A and the second auxiliary portion 68B can be cooled by means of the second refrigerant. This can contribute to improving the reliability of the first auxiliary portion 68A and the second auxiliary portion 68B.

In the low-temperature loop flow passage 60, the flow passage area of the second intermediate pipe 60C is set to be larger than the flow passage area of the bypass pipe 60F. Accordingly, the rate of the second refrigerant which has passed through the radiator 62 inside the downstream-side pipe 60D can be suitably adjusted by the thermostat valve 64. Thus, it is possible to further stabilize the temperature of the second refrigerant inside the downstream-side pipe 60D.

The engine cooling radiator 36 is provided on the rear side in the vehicle front-rear direction from the radiator 62 connected to the low-temperature loop flow passage 60. In the adsorption refrigerating machine 20, the temperature at which the first refrigerant is condensed can be set to a comparatively low temperature. Accordingly, even when the radiator 62 is arranged on the front side from the engine cooling radiator 36 in the vehicle front-rear direction, the influence of the radiator 62 on the engine cooling radiator 36 can be suppressed. Thus, an efficient layout structure in the vehicle can be realized.

The radiator 62 is electrically connected to the ECU 70, and the fan of the radiator 62 is driven by the ECU 70. Accordingly, the driving of the fan of the radiator 62 can be controlled according to the temperature of the second refrigerant at the water temperature sensor 72. Thus, the motive power consumption incurred by driving the fan can be suppressed.

In the following, a modified example of the thermostat valve 64 will be described. As described above, in the embodiment, the thermostat valve 64 that connects between the downstream side of the second intermediate pipe 60C and the downstream side of the bypass pipe 60F includes the thermostat. Instead of this configuration, in the modified example, a valve that connects between the downstream side of the second intermediate pipe 60C and the downstream side of the bypass pipe 60F is configured as a control valve 80 being the "valve" to be controlled by the ECU 70. A more specific description follows.

Although not shown, the control valve 80 has a valve that opens and closes the second intermediate pipe 60C (i.e., the flow passage passing through the radiator 62), and a valve that opens and closes the bypass pipe 60F. As indicated by the two-dot dashed line in FIG. 3, the control valve 80 is electrically connected to the ECU 70 serving as the "valve controller." The control valve 80 is configured such that the opening and closing of the valve that opens and closes the second intermediate pipe 60C and the valve that opens and closes the bypass pipe 60F is controlled by the ECU 70.

As in the embodiment, the fan of the radiator 62 and the water temperature sensor 72 are electrically connected to the ECU 70. The ECU 70 is configured to adjust, on the basis of signals output from the water temperature sensor 72, the open areas of the valve that opens and closes the second intermediate pipe 60C and the valve that opens and closes the bypass pipe 60F. That is, the ECU 70 is configured to adjust the amount of second refrigerant which has passed through the radiator 62 and the amount of second refrigerant which has passed through the bypass pipe 60F according to the temperature of the second refrigerant by means of the control valve 80. Moreover, the first auxiliary portion 68A and the second auxiliary portion 68B are provided respectively with a first temperature sensor 82A and a second temperature sensor 82B that detect the temperatures of the first auxiliary portion 68A and the second auxiliary portion 68B, and the first temperature sensor 82A and the second temperature sensor 82B are electrically connected to the ECU 70.

In the modified example, as in the embodiment, when the temperature of the second refrigerant is lower than the predetermined temperature Tm at start of the vehicle cooling system 10 etc., the valve that opens and closes the second intermediate pipe 60C is closed and the valve that opens and closes the bypass pipe 60F is opened under the control of the ECU 70. Thus, in the modified example, too, as in the embodiment, the temperature of the second refrigerant inside the downstream-side pipe 60D can be promptly raised to the predetermined temperature Tm. On the other hand, when the ECU 70 detects that the temperature of the second refrigerant is equal to or higher than the predetermined temperature Tm on the basis of the signal output from the water temperature sensor 72 to the ECU 70, the open areas of the valve that opens and closes the second intermediate pipe 60C and the valve that opens and closes the bypass pipe 60F are adjusted under the control of the ECU 70. Accordingly, the second refrigerant which has passed through the radiator 62 flows into the downstream-side pipe 60D, so that the temperature of the second refrigerant can be kept at the predetermined temperature Tm. Thus, in the modified example too, the same workings and effects as in the embodiment can be achieved.

In the modified example, the opening and closing of the valves of the control valve 80 is adjusted (controlled) by the ECU 70 on the basis of the signals output from the water temperature sensor 72 to the ECU 70, so that the temperature of the second refrigerant flowing through the downstream-side pipe 60D can be finely controlled. Thus, it is possible to accurately control the temperature of the second refrigerant to the predetermined temperature Tm, and ultimately to accurately perform the cooling control of the vehicle cooling system 10.

In the modified example, the first temperature sensor 82A and the second temperature sensor 82B are electrically connected to the ECU 70. Accordingly, it is possible to adjust the temperature of the second refrigerant by controlling the opening and closing of the valves of the control valve 80 according to the temperatures of the first auxiliary portion 68A and the second auxiliary portion 68B. Thus, it is possible to adjust the temperature of the second refrigerant (the adsorbent 26 on the adsorption side in the adsorption refrigerating machine 20) while enhancing the cooling effect on the first auxiliary portion 68A and the second auxiliary portion 68B.

In the modified example, the ECU 70 is electrically connected to the control valve 80 and the radiator 62, so that the driving of the fan of the radiator 62 can be controlled according to the open areas of the valves of the control valve 80 that are controlled by the ECU 70. Thus, the motive power consumption incurred by driving the fan can be suppressed.

In the modified example, when the ECU 70 detects that the temperature of the second refrigerant has reached the predetermined temperature Tm on the basis of the signal output from the water temperature sensor 72 to the ECU 70, the valves of the control valve 80 are adjusted under the control of the ECU 70 so as to adjust the amount of second refrigerant flowing from the second intermediate pipe 60C into the downstream-side pipe 60D. Instead of this configuration, for example, the ECU 70 may calculate the average temperature of the second refrigerant in a predetermined period, and the ECU 70 may open and close the valves of the control valve 80 on the basis of the calculated average temperature of the second refrigerant.

The control valve 80 may be controlled by the ECU 70 on the basis of the time from the start of the engine 32 and the signal output from the water temperature sensor 72 to the ECU 70. For example, during a predetermined time from the start of the engine 32, the valves of the control valve 80 may be kept closed by the ECU 70, and after the predetermined time has elapsed, the control valve 80 may be controlled by the ECU 70 on the basis of the signal output from the water temperature sensor 72 to the ECU 70.

The route passing through the second intermediate pipe 60C and the route passing through the bypass pipe 60F may be switched by the control valve 80 of the modified example.

In the embodiment and the modified example, the first auxiliary portion 68A and the second auxiliary portion 68B are connected to the upstream-side pipe 60A in the low-temperature loop flow passage 60. However, the number of the auxiliary portions connected to the upstream-side pipe 60A can be set arbitrarily. That is, the number of the auxiliary portions connected to the upstream-side pipe 60A may be one, or alternatively three or more auxiliary portions may be connected to the upstream-side pipe 60A.

In the embodiment and the modified example, the thermostat valve 64 or the control valve 80 is provided at the downstream-side end of the second intermediate pipe 60C. However, the valve that controls the flow rate may be provided at other places. For example, the valve may be provided at an arbitrary position in the first intermediate pipe 60B, the second intermediate pipe 60C, or the bypass pipe 60F.

The water temperature sensor 72 may be provided in each of the second intermediate pipe 60C and the bypass pipe 60F, and the thermostat valve 64 or the control valve 80 may be controlled on the basis of the temperature of the second refrigerant in the second intermediate pipe 60C or the temperature of the second refrigerant in the bypass pipe 60F. Alternatively, the water temperature sensor 72 may be provided in the upstream-side pipe 60A and the temperature of the second refrigerant immediately after passing through the adsorption refrigerating machine 20 may be detected.

**Claims**

1. A vehicle cooling system **characterized by** comprising:

an adsorption refrigerating machine (20) including an adsorber portion (22, 24), the adsorber portion (22, 24) including an evaporation-condensation section (22B, 24B) configured to house a first refrigerant, and an adsorption section (22A, 24A) configured to house an adsorbent (26) capable of adsorbing evaporated first refrigerant, the adsorption refrigerating machine (20) being configured to cool a third refrigerant that circulates between the evaporation-condensation section (22B, 24B) and a cooler core (52) with evaporative latent heat of the first refrigerant;

a second refrigerant flow passage (60) through which a second refrigerant is configured to flow, the second refrigerant is configured to circulate between the adsorption section (22A, 24A) and a radiator (62);

a bypass flow passage (60F) that is branched from the second refrigerant flow passage (60) on an upstream side of the radiator (62), the bypass flow passage (60F) being connected to the second refrigerant flow passage on a downstream side of the radiator (62) after bypassing the radiator (62);

a valve (64) that is provided in the bypass flow passage (60F) or an intermediate part (60B, 60C) of the second refrigerant flow passage (60), the intermediate part (60B, 60C) being a part of the second refrigerant flow passage (60) from a point at which the bypass flow passage (60F) is branched from the second refrigerant flow passage (60) on the upstream side of the radiator to a point at which the bypass flow passage (60F) is connected to the second refrigerant flow passage (60) on the downstream side of the radiator (62), the intermediate part (60B, 60C) passing through the radiator (62); and

a valve controller (70) configured to control opening and closing of the valve (64) based on a temperature of the second refrigerant.

**2.** The cooling system according to claim 1, **characterized in that**
the valve (64) is provided at the point of the second refrigerant flow passage (60) at which the bypass flow passage (60F) is connected to the second refrigerant flow passage (60) on the downstream side of the radiator (62).

**3.** The cooling system according to claim 2, **characterized in that**
the valve controller (70) is configured to adjust an open area of the valve (64) toward the intermediate part (60B, 60C) or the bypass flow passage (60F) based on the temperature of the second refrigerant.

**4.** The cooling system according to any one of claims 1 to 3, further comprising
a temperature sensor (72) that is provided in a part of the second refrigerant flow passage (60) from the point at which the bypass flow passage (60F) is connected to the second refrigerant flow passage (60) on the downstream side of the radiator (62) to the adsorption refrigerating machine (20), or in a part of the second refrigerant flow passage (60) from the adsorption refrigerating machine (20) to the point at which the bypass flow passage (60F) is branched from the second refrigerant flow passage (60) on the upstream side of the radiator, and that is configured to detect the temperature of the second refrigerant, wherein
the valve controller (70) is configured to control the opening and closing of the valve (64) based on the temperature of the second refrigerant detected by the temperature sensor (72).

**5.** The cooling system according to claim 2, further comprising
a temperature sensor (72) that is configured to detect the temperature of the second refrigerant, the temperature sensor (72) being provided at the valve (64) or on a downstream side of the valve (64) in the second refrigerant flow passage (60), wherein
the valve controller (70) is configured to control the opening and closing of the valve (64) based on the temperature of the second refrigerant detected by the temperature sensor (72).

**6.** The cooling system according to any one of claims 1 to 5, **characterized in that**
the second refrigerant flow passage (60) is connected to an auxiliary portion (68A, 68B) on the upstream side of the radiator (62), and a temperature of the auxiliary portion (68A, 68B) is configured to be adjusted with the second refrigerant.

**7.** The cooling system according to any one of claims 2 to 6, **characterized in that**
a flow passage area of a part of the second refrigerant flow passage (60) connected to the valve (64) is larger than a flow passage area of the bypass flow passage (60F).

**8.** The cooling system according to any one of claims 1 to 7, further comprising
an engine cooling radiator (36) that is configured to cool an engine (32), the engine cooling radiator (36) being provided on a rear side from the radiator (62) in a vehicle front-rear direction.

# FIG. 1

# FIG. 2

# FIG. 3

# FIG. 4

# FIG. 5

Europäisches
Patentamt

European
Patent Office

Office européen
des brevets

# EUROPEAN SEARCH REPORT

Application Number

EP 16 19 3998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 213149 A (DENSO CORP) 7 August 2001 (2001-08-07) | 1-3,7 | INV. B60H1/32 |
| Y | * paragraphs [0063] - [0067]; figures 2,6 * | 4-6,8 | B60H1/00 |
| Y | JP 2002 254925 A (DENSO CORP) 11 September 2002 (2002-09-11) | 4,5 | |
| A | * paragraphs [0018], [0033], [0049] - [0051]; figures 1,2 * | 1 | |
| Y | US 2012/037336 A1 (ISHIKAWA MASAHIDE [JP] ET AL) 16 February 2012 (2012-02-16) * paragraphs [0020] - [0021]; figures 2a, 4 * | 6 | |
| Y | JP 2000 177374 A (DENSO CORP) 27 June 2000 (2000-06-27) | 8 | |
| A | * paragraphs [0011] - [0014]; figures 1, 2 * | 1-5 | |
| A | JP H05 296599 A (NISHODO KUCHOKI KK) 9 November 1993 (1993-11-09) * paragraphs [0015], [0016]; figure 2 * | 1-5 | TECHNICAL FIELDS SEARCHED (IPC) B60H F25B |

The present search report has been drawn up for all claims

| Place of search | Date of completion of the search | Examiner |
|---|---|---|
| Munich | 20 March 2017 | Kristensen, Julien |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 16 19 3998

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2017

| Patent document cited in search report | | Publication date | Patent family member(s) | | Publication date |
|---|---|---|---|---|---|
| JP 2001213149 | A | 07-08-2001 | JP JP | 4265067 B2<br>2001213149 A | 20-05-2009<br>07-08-2001 |
| JP 2002254925 | A | 11-09-2002 | JP JP | 4457508 B2<br>2002254925 A | 28-04-2010<br>11-09-2002 |
| US 2012037336 | A1 | 16-02-2012 | CN<br>DE<br>JP<br>US<br>WO | 102414414 A<br>112009004747 T5<br>5120499 B2<br>2012037336 A1<br>2010128547 A1 | 11-04-2012<br>17-01-2013<br>16-01-2013<br>16-02-2012<br>11-11-2010 |
| JP 2000177374 | A | 27-06-2000 | JP JP | 4341090 B2<br>2000177374 A | 07-10-2009<br>27-06-2000 |
| JP H05296599 | A | 09-11-1993 | NONE | | |

EPO FORM P0459

For more details about this annex : see Official Journal of the European Patent Office, No. 12/82

**EP 3 162 600 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004150384 A